# EUROPÄISCHE PATENTSCHRIFT

(11) **EP 2 424 718 B1**
(45) Veröffentlichungstag und Bekanntmachung des Hinweises auf die Patenterteilung: **11.12.2013**
(21) Anmeldenummer: 10702242.8
(22) Anmeldetag: 20.01.2010
(51) Int. Cl.: B29C 45/00, B29C 44/12, B29C 44/58, B29C 45/16

(54) **VORRICHTUNG ZUR HERSTELLUNG EINES KUNSTSTOFF-FORMTEILS**
DEVICE FOR PRODUCING A PLASTIC MOLDED PART
DISPOSITIF DE PRODUCTION D'UNE PIÈCE MOULÉE EN MATIÈRE PLASTIQUE

(30) Priorität: 30.04.2009 DE 202009006239 U
(43) Veröffentlichungstag der Anmeldung: 07.03.2012
(73) Patentinhaber: SMP Deutschland GmbH, 79268 Bötzingen (DE)
(72) Erfinder: RICHTER, Detlef, 93354 Siegenburg (DE); SCHMIDLE, Stefan, 79288 Gottenheim (DE); KATTELMANN, Rüdiger, 79241 Ihringen (DE)
(74) Vertreter: Patentanwälte Westphal, Mussgnug & Partner
(86) Internationale Anmeldenummer: PCT/EP2010/000303
(87) Internationale Veröffentlichungsnummer: WO 2010/124751

(56) Entgegenhaltungen:
- EP-A1- 2 036 626
- EP-A1- 2 052 833
- EP-A1- 2 113 429

## Beschreibung

Die vorliegende Erfindung betrifft eine vorrichtung zur Herstellung eines aus einem Träger und einer geschäumten Schicht bestehenden Kunststoff-Formteils als Rohling für ein kaschiertes Innenverkleidungsbau-teil für ein Kraftfahrzeug, gemäß Oberbegriff des Anspruchs 1.

Kaschierte Formteile für die Herstellung von Innenverkleidungen von Kraftfahrzeugen werden üblicherweise dadurch erhalten, dass auf einen Träger aus einem thermoplastischen Kunststoff, der beispielsweise über eine Spritzgießverfahren gewonnen wird, in einem Formwerkzeug ein Polyurethanschaum aufgetragen wird. Das so gewonnene Bauteil wird anschließend mit einer Dekorfolie, einem Stoff oder auch mit Leder kaschiert.

Dazu wird zunächst der Träger in einem Formwerkzeug ausgebildet und anschließend mit Folyurethanschaum beschichtet. Das Auftragen des Polyurethanschaums erfolgt üblicherweise in einem dafür vorgesehenen Schäumwerkzeug, in den der fertige Träger eingelegt wird. Es besteht jedoch auch die Möglichkeit, das Spritzgießen des Trägers sowie das Auftragen des Schaums in einem Werkzeug durchzuführen, wobei dann der spritzgegossene Träger beispielsweise im Formwerkzeugkern verbleibt, der anschließend mit einem zweiten Formgegenstück kombiniert wird, um eine entsprechende Kavität für den aufzutragenden Schaum bereitzustellen.

Nachdem der Schaum ausreagiert hat und an dem Träger haftet, wird das Formwerkzeug geöffnet und das Bauteil kann entnommen werden, um in einem anschließenden Verfahrensschritt mit einer Folie, Stoff oder Leder kaschiert zu werden. Dazu werden in das Bauteil in einem vorgeschalteten Arbeitsschritt durch Bohren, Fräsen oder Stanzen von der Trägerseite her Löcher eingebracht, mit deren Hilfe man später beim Kaschieren des Bauteils ein Vakuum anlegen kann, um die Folie anzusaugen und auf dem Bauteil zu fixieren. Vor dem Kaschieren wird die Schaumseite des Bauteils mit einem Kleber beschichtet, anschließend wird das Vakuum angelegt und die Folie, der Stoff oder das Leder kann angesaugt werden, wobei das Vakuum solange aufrechterhalten wird, bis der Kleber soweit ausgehärtet ist, dass ein Verschieben der aufkaschierten Folie nicht mehr zu befürchten ist. Ein großer Nachteil bei dieser Art der Herstellung von Innenverkleidungsbauteilen für Kraftfahrzeuge besteht in der Vielzahl von unterschiedlichen Verfahrensschritten, die miteinander kombiniert werden müssen. Dazu sind für jeden einzelnen Verfahrensschritt Spezialwerkzeuge notwendig, wobei die Bestückung der Werkzeuge häufig durch Handarbeit erfolgt, was mit einem entsprechenden Kosten- und Zeitaufwand verbunden ist.

Die EP 2 052 833 Al beschreibt ein Verfahren zur Herstellung einer Sollbruchlinie für eine Airbagöffnung in einem Formteil, bei dem beim Einspritzen des Polymermaterials für das Trägermaterial Durchbrüche dadurch ausgebildet werden, dass Perforationswerkzeuge, die in dem Formwerkzeug angeordnet sind, die Funktion von Kernen übernehmen. Nach Beendigung des Spritzgießvorgangs weist der Träger unmittelbar entsprechende Durchbrüche auf. Hierbei haben die Perforationswerkzeuge die Aufgabe, die in dem nachfolgenden Fertigungsschritt eingespritzte Dekorschicht vor dem Erstarren des Polymermaterials gezielt zu schwächen. Die Perforationsnadeln dringen also in die noch nicht vollständig erstarrte Schaumschicht ein. Der Vorschub der Perforationsnadeln ist hierbei so gewählt, dass diese bis zu einer kompakten Außenschicht hin geführt wird, wodurch eine Sollbruchlinie entsteht, die durch den Träger und die Schaumschicht bis zur Dekorhaut hin reicht, ohne diese zu durchstoßen. Die Perforationswerkzeuge sind deshalb nicht dazu ausgelegt und in der Lage, nachträglich Öffnungen in ein erstarrtes Polymermaterial einzubringen.

Die EP 2 036 626 Al, von der die Erfindung ausgeht, zeigt eine Perforationsvorrichtung, welche eine Stanzvorrichtung aufweist, die Stanzwerkzeuge mit Stanzzylindern, Kolbenstangen, Nadelhalter und Stanznadeln umfasst. Mit dieser Perforationsvorrichtung wird ein Seitenwandverkleidungsteil des Innenraums eines Kraftfahrzeuges, welches auf einer Werkstückaufnahme aufliegt, mit einer Stanzöffnung versehen. Die Perforationsvorrichtung ist hierbei separat vom Formwerkzeug für die eigentliche Formgebung und oberhalb einer Werkstückaufnahme befestigt. Der Stanzvorgang erfolgt deshalb in einem im Formgebungsverfahren örtlich getrennten Bearbeitungsbereich.

Der vorliegenden Erfindung lag somit das Problem zugrunde, eine gattungsgemaße Vorrichtung anzubieten, die die oben geschilderten Nachteile des Standes der Technik nicht aufweisen.

Gelöst wird diese Aufgabe durch eine Vorrichtung mit den Merkmalen des Kennzeichens des Anspruchs 1. Bevorzugte Ausgestaltungen und Weiterentwicklungen der erfindungsgemäßen Vorrichtung sind Gegenstand der Unteransprüche.

Eine Vorrichtung zur Herstellung eines aus einem Träger und einer geschäumten Schicht bestehenden Kunststoff-Formteils, das als Rohling für ein Innenverkleidungsbauteil für ein Kraftfahrzeug eingesetzt werden soll, ist üblicherweise ein mehrteiliges Formwerkzeug nit einem Formwerkzeugkern und einer Formwerkzeugmatrize.

In der Regel ist der Formwerkzeugkern dazu bestimmt, den mit Schaum zu beschichtenden Träger aufzunehmen, während die Formwerkzeugmatrize den entsprechenden Hohlraum (Kavität) für die Ausbildung des Schaums zur Verfügung stellt, wobei es jedoch auch durchaus denkbar ist, dass die oben geschilderten Funktionen von Formwerkzeugkern und Formwerkzeugmatrize vertauscht sind, so dass der Träger in der Formwerkzeugmatrize angeordnet ist.

Es ist nun erfindungsgemäß vorgesehen, dass in dem zur Aufnahme des Trägers bestimmten Formwerkzeugteil Stanzwerkzeuge integriert sind.

Diese Stanzwerkzeuge bestehen beispielsweise aus einem Stanzzylinder, dessen Kolbenstange über einen Halter mit Stanznadeln verbunden ist, mit deren Hilfe dann entsprechende Vakuumlöcher in das zu fertigende Bauteil gestanzt werden.

Die Stanzwerkzeuge bzw. Stanzzylinder sind auf der Rückseite des entsprechenden Formwerkzeugteils in einer dafür vorgesehenen Aufnahme angeordnet und mit Hilfe einer den Stanzzylinder umfassenden Befestigungsvorrichtung am Formwerkzeugteil befestigt. Die Stanznadeln befinden sich im Ruhezustand in einer auf der Innenseite des Formwerkzeugteils formschlüssig angeordneten Führung und werden bei ihrem Einsatz durch den auf dieser Seite des Werkzeugs angeordneten Träger gestoßen.

Das Formwerkzeug kann entweder eine Schäumform oder auch ein Spritzgusswerkzeug sein, das nach dem Spritzgießen des Trägers für den Schäumprozess umgerüstet wird. Als Stanzwerkzeuge werden pneumatische oder hydraulisch angetriebene Zylinder eingesetzt, die mit entsprechenden Stanznadeln ausgerüstet sind.

Eine besonders vorteilhafte Ausgestaltung der Erfindung sieht vor, dass die Dicke des Trägers an den Stellen, die später gestanzt werden sollen, bereits reduziert ist, so dass das Durchstoßen des relativ harten Trägers erleichtert wird.

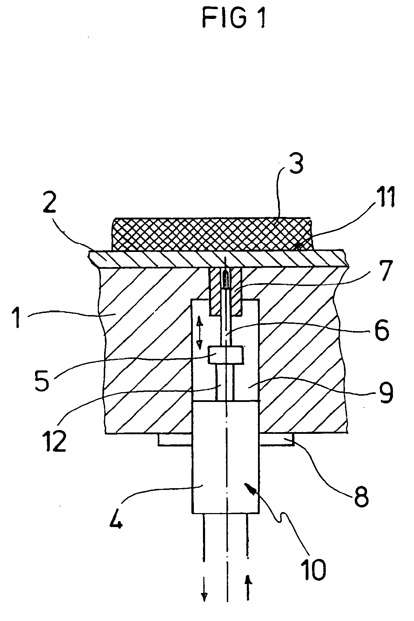

Im Folgenden wird die vorliegende Erfindung anhand einer Abbildung ausführlich erläutert, wobei die betreffende Figur 1 einen Ausschnitt aus dem Formwerkzeug als Querschnitt zeigt.

In der Figur 1 ist ein Ausschnitt eines Formwerkzeugteils 1 zu sehen, in den ein Stanzwerkzeug 10 integriert ist, das aus einem Stanzzylinder 4, einer Kolbenstange 12, einem Nadelhalter 5 und einer Stanznadel 6 besteht. Dabei ist die Stanznadel 6 über den Nadelhalter 5 mit der Kolbenstange 12 des Stanzzylinders 4 verbunden. Das Stanzwerkzeug 10 ist auf der Rückseite des Formwerkzeugteils 1 über eine Befestigungsvorrichtung in einer Vertiefung 9 im Formwerkzeugteil 1 angeordnet. Die Stanznadel 6 ist in einer Führung 7 angeordnet, die wiederum formschlüssig zur Innenseite des Formwerkzeugteils 1 in diesem angeordnet ist. Des Weiteren ist auf dieser Abbildung der Träger 2 zu erkennen, der auf der Innenseite des Formwerkzeug 1 angeordnet ist, sowie die geschäumte Schicht 3, die zusammen mit dem Träger 2 das zu kaschierende Kunststoff-Formteil 11 ausmacht.

Um ein optimales Aufbringen der Dekorfolie auf das zu kaschierende Formteil zu erreichen, ist es für den Fachmann selbstverständlich, dass mehrere Stanzlöcher an ausgewählten Positionen im Formteil eingebracht werden. Ebenso bedarf keiner besonderen Erwähnung, dass nicht splitternde Trägermaterialien eingesetzt werden.

### Bezugszeichenliste

- 1: Formwerkzeugteil
- 2: Träger
- 3: Schaumschicht
- 4: Stanzzylinder
- 5: Nadelhalter
- 6: Stanznadel
- 7: Führung
- 8: Befestigungsvorrichtung
- 9: Aufnahme
- 10: Stanzwerkzeug
- 11: Kunststoffformteil
- 12: Kolbenstange

## Patentansprüche

1. Vorrichtung zur Herstellung eines aus einem Träger (2) und einer geschäumten Schicht (3) bestehenden Kunststoff-Formteils (11) als Rohling für ein kaschiertes Innenverkleidungsbauteil für ein Kraftfahrzeug, wobei die Vorrichtung ein mehrteiliges Formwerkzeug mit einem Formwerkzeugkern und einer Formwerkzeugmatrize sowie Stranzwerkzeuge (10) umfasst, wobei die Stanzwerkzeuge (10) Stanzzylinder (4), Kolbenstangen (12), Nadelhalter (5) und Stanznadeln (6) umfassen,
**dadurch gekennzeichnet, dass**
in dem zur Aufnahme des Trägers (2) bestimmten Formwerkzeugteil (1) die Stanzwerkzeuge (10) integriert sind.

2. Vorrichtung nach Anspruch 1,
**dadurch gekennzeichnet, dass**
die Stanzwerkzeuge (10) auf der Rückseite des Formwerkzeugteils (1) angeordnet sind und über eine den Stanzzylinder (4) umschließende Befestigungsvorrichtung (8) in einer Aufnahme (9) des Formwerkzeugteils (1) befestigt sind.

3. Vorrichtung nach Anspruche 1 oder 2,
**dadurch gekennzeichnet, dass**
die Stanznadeln (6) in einer auf der Innenseite des Formwerkzeugteils (1) formschlüssig angeordneten Führung (7) angeordnet sind.

4. Vorrichtung nach einem der Ansprüche 1 bis 3,
**dadurch gekennzeichnet, dass**
das Formwerkzeug ein Spritzgusswerkzeug ist.

5. Vorrichtung nach einem der Ansprüche 1 bis 3,
**dadurch gekennzeichnet, dass**
das Formwerkzeug eine Schäumform ist.

## Claims

1. Device for the production of a moulded part (11) of plastic, comprising a carrier (2) and a foamed layer (3), as a blank for a laminated interior trim component for a motor vehicle, wherein the device comprises a multi-part mould having a mould core and a mould matrix as well as punching tools (10), wherein the punching tools (10) comprise punching cylinders (4), piston rods (12), needle holders (5) and punching needles (6)
**characterised in that**
the punching tools (10) are integrated in the mould part (1) intended for receiving the carrier (2).

2. Device according to claim 1
**characterised in that**
the punching tools (10) are arranged on the reverse of the mould part (1) and are fixed in a receiver (9) of the mould part (1) via a fixing device (8) enclosing the punching cylinder (4).

3. Device according to claim 1 or 2
**characterised in that**
the punching needles (6) are arranged in a guide (7) arranged in a positive-locking manner on the inside of the mould part (1).

4. Device according to one of claims 1 to 3
**characterised in that**
the mould is an injection mould.

5. Device according to one of claims 1 to 3
**characterised in that**
the mould is a foaming mould.

## Revendications

1. Dispositif d'obtention d'une partie moulée en matière plastique (11) constituée d'un support (2) et d'une couche de mousse (3) entant qu'ébauche pour un élément de garniture interne recouvert d'un véhicule automobile, ce dispositif comportant un outil de moulage en plusieurs parties muni d'un noyau d'outil de moulage et d'une matrice d'outil de moulage et ainsi que d'outils d'estampage (10), les outils d'estampage (10) comprenant des cylindres d'estampage (4) des tiges de piston (12) des supports d'aiguilles (5) et des aiguilles d'estampage (6),
**caractérisé en ce que**
les outils d'estampage (10) sont intégrés dans la partie de l'outil de moulage (1) destinée à recevoir le support (2).

2. Dispositif conforme à la revendication 1,
**caractérisé en ce que**
les outils d'estampage (10) sont montés sur la face arrière de la partie (1) de l'outil de moulage, et sont fixés, par l'intermédiaire d'un dispositif de fixation (8) entourant le cylindre d'estampage (4) dans un logement (9) de la partie (1) de l'outil de moulage.

3. Dispositif conforme à la revendication 1 ou 2,
**caractérisé en ce que**
les aiguilles d'estampage (6) sont montés dans un élément de guidage (7) monté par une liaison par la forme sur la face interne de la partie (1) de l'outil de moulage.

4. Dispositif conforme à l'une des revendications 1 à 3,
**caractérisé en ce que**
l'outil de moulage est un outil de moulage par injection.

5. Dispositif conforme à l'une des revendications 1 à 3,
**caractérisé en ce que**
l'outil de moulage est un moule en mousse.
